(19) Europäisches Patentamt
European Patent Office
Office européen des brevets

(11) Veröffentlichungsnummer: **0 220 635**
**A1**

(12) # EUROPÄISCHE PATENTANMELDUNG

(21) Anmeldenummer: **86114462.4**

(22) Anmeldetag: **18.10.86**

(51) Int. Cl.⁴: **C07F 9/40**, C07F 9/38, A01N 57/22

(30) Priorität: **31.10.85 DE 3538689**

(43) Veröffentlichungstag der Anmeldung: **06.05.87 Patentblatt 87/19**

(84) Benannte Vertragsstaaten: **AT BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Förster, Heinz, Dr.**
**Am Eckbusch 47**
**D-5600 Wuppertal 1(DE)**
Erfinder: **Santel, Hans-Joachim, Dr,**
**Grünstrasse 9a**
**D-5090 Leverkusen(DE)**
Erfinder: **Schmidt, Robert R., Dr.**
**Im Waldwinkel 110**
**D-5060 Bergisch-Gladbach 2(DE)**

(54) **Phenoxybenzoesäure-Derivate.**

(57) Die Erfindung betrifft Phenoxybenzoesäure-Derivate der Formel (I),

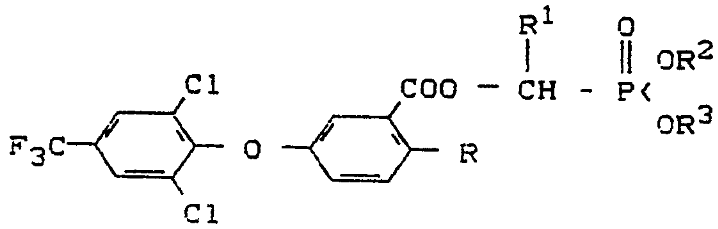

(I)

in welcher
R für Wasserstoff, Nitro oder Cyano steht,
$R^1$ für Wasserstoff oder Alkyl steht und
$R^2$ und $R^3$ gleich oder verschieden sind und für Wasserstoff, Alkyl, Halogenalkyl oder für ein Äquivalent eines Alkali-oder Erdalkalimetallions stehen oder
$R^2$ und $R^3$ gemeinsam für einen gegebenenfalls substituierten Alkandiylrest stehen,
mehrere Verfahren zu deren Herstellung und ihre Verwendung als Herbizide.

EP 0 220 635 A1

Xerox Copy Centre

## Phenoxybenzoesäure-Derivate

Die Erfindung betrifft neue Phenoxybenzoesäure-Derivate, mehrere Verfahren zu deren Herstellung und ihrem Verwendung als Herbizide.

Es ist bereits bekannt, daß zahlreiche Phenoxybenzoesäure-Derivate herbizide Eigenschaften besitzen - (vgl. DE-OS 2 311 638). So kann zum Beispiel das Natriumsalz der 3-(2-Chlor-4-trifluormethyl-phenoxy)-6-nitro-benzoesäure zur Bekämpfung von Unkraut eingesetzt werden. Die Wirkung dieses Stoffes ist gut, jedoch werden bei geringen Aufwandmengen einige Unkräuter nicht immer voll erfaßt.

Es wurden nun neue Phenoxybenzoesäure-Derivate der Formel (I)

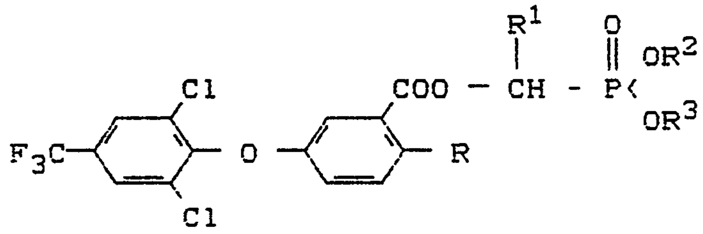

(I)

in welcher
R für Wasserstoff, Nitro oder Cyano steht,
R' für Wasserstoff oder Alkyl steht und
$R^2$ und $R^3$ gleich oder verschieden sind und für Wasserstoff, Alkyl, Halogenalkyl oder für ein Äquivalent eines Alkali-oder Erdalkalimetallions stehen oder
$R^2$ und $R^3$ gemeinsam für einen gegebenenfalls substituierten Alkandiylrest stehen,
gefunden.

Die Phenoxybenzoesäure-Derivate der Formel (I) enthalten mindestens ein asymmetrisch substituiertes Kohlenstoffatom und können deshalb in verschiedenen enantiomeren Formen vorliegen. Die Erfindung betrifft sowohl die möglichen einzelnen Isomeren als auch Gemische dieser Isomeren.

Weiterhin wurde gefunden, daß man Phenoxybenzoesäure-Derivate der Formel (I) erhält, wenn man

a) Phenoxybenzoesäurechloride der Formel (II)

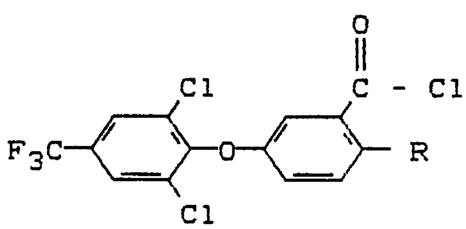

(II)

in welcher
R die oben angegebene Bedeutung hat,
mit Hydroxymethylphosphonsäureestern der Formel (III)

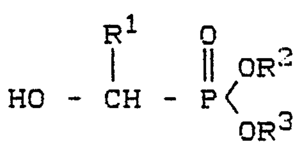

(III)

in welcher
$R^1$, $R^2$ und $R^3$ die oben angegebenen Bedeutungen haben,
gegebenenfalls in Gegenwart eines Säurebindemittels sowie gegebenenfalls in Gegenwart eines Verdünnungsmittels umsetzt,
oder

b) Phenoxybenzoesäure-Derivate der Formel (Ia),

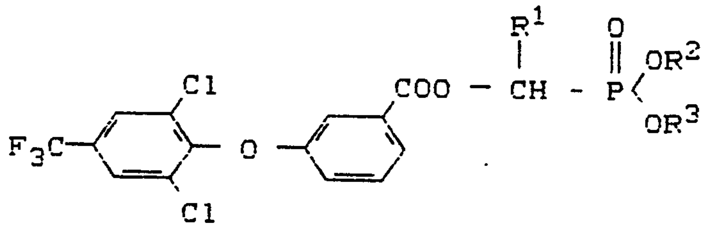

(Ia)

in welcher
$R^1$, $R^2$ und $R^3$ die oben angegebenen Bedeutungen haben,
mit einem Nitrierungsmittel gegebenenfalls in Gegenwart eines Katalysators sowie gegebenenfalls in Gegenwart eines Verdünnungsmittels umsetzt.

Schließlich wurde gefunden, daß sich die neuen Phenoxybenzoesäure-Derivate der Formel (I) durch eine hervorragende herbizide Wirkung auszeichnen.

Überraschenderweise sind die erfindungsgemäßen Phenoxybenzoesäure-Derivate der Formel (I) gegen einige wichtige Unkräuter wesentlich wirksamer und besitzen wesentlich bessere selektive Eigenschaften als das Natriumsalz der 3-(2-Chlor-4-trifluormethyl-phenoxy)-6-nitro-benzoesäure, welches ein strukturell ähnlicher, vorbekannter Wirkstoff analoger Wirkungsrichtung ist.

Die erfindungsgemäßen Phenoxybenzoesäure-Derivate sind durch die Formel (I) allgemein definiert. Bevorzugt sind diejenigen Verbindungen der Formel (I), in welchen
R für Wasserstoff, Nitro oder Cyano steht,
$R^1$ für Wasserstoff oder Alkyl mit 1 bis 3 Kohlenstoffatomen steht und
$R^2$ und $R^3$ gleich oder verschieden sind und für Wasserstoff, Alkyl mit 1 bis 6 Kohlenstoffatomen, Halogenalkyl mit 1 bis 6 Kohlenstoffatomen im Alkylteil und 1 bis 5 Halogenatomen, wie Fluor, Chlor und/oder Brom oder für ein Äquivalent eines Natrium-, Kalium-, Calcium-oder Magnesiumions stehen oder
$R^2$ und $R^3$ gemeinsam für einen gegebenenfalls durch $C_1$-$C_2$-Alkyl substituierten Alkandiylrest mit 2 bis 5 Kohlenstoffatomen stehen.

Besonders bevorzugt sind diejenigen Verbindungen der Formel (I), in denen
R für Nitro steht,
$R^1$ für Wasserstoff oder Alkyl mit 1 oder 2 Kohlenstoffatomen steht, und
$R^2$ und $R^3$ gleich oder verschieden sind und für Wasserstoff, Alkyl mit 1 bis 4 Kohlenstoffatomen, Halogenalkyl mit 1 bis 4 Kohlenstoffatomen im Alkylteil und 1 bis 3 Halogenatomen (Fluor und/oder Chlor) oder für ein Äquivalent eines Natrium-, Kalium-oder Calciumions stehen oder
$R^2$ und $R^3$ gemeinsam für einen gegebenenfalls durch Methyl und/oder Ethyl substituierten Alkandiylrest mit 2 oder 3 Kohlenstoffatomen stehen.

Ganz besonders bevorzugt sind diejenigen Verbindungen der Formel (I), in welchen
R für Nitro steht,
$R^1$ für Wasserstoff oder Methyl steht und
$R^2$ und $R^3$ gleich oder verschieden sind und für Wasserstoff, Methyl, Ethyl, n-Propyl, i-Propyl, n-Butyl, i-Butyl, sec.-Butyl, tert.-Butyl, Chlormethyl, Chlorethyl, 1-Chlor-n-propyl, Fluormethyl, Fluorethyl oder 1-Fluor-n-propyl stehen.

Als Beispiele für Phenoxybenzoesäure-Derivate der Formel (I) seien die in der folgenden Tabelle formelmäßig aufgeführten Verbindungen genannt:

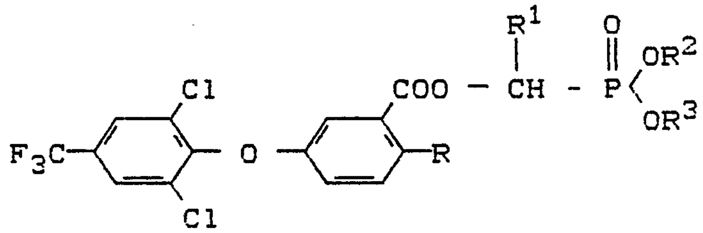

(I)

Tabelle 1

R = H.$NO_2$

| $R^1$ | $R^2$ | $R^3$ |
|---|---|---|
| H | $CH_3$ | $CH_3$ |
| $CH_3$ | $CH_3$ | $CH_3$ |
| H | $C_2H_5$ | $C_2H_5$ |
| $CH_3$ | $C_2H_5$ | $C_2H_5$ |
| H | $n-C_3H_7$ | $n-C_3H_7$ |
| $CH_3$ | $n-C_3H_7$ | $n-C_3H_7$ |
| H | $i-C_3H_7$ | $i-C_3H_7$ |
| $CH_3$ | $i-C_3H_7$ | $i-C_3H_7$ |
| H | $n-C_4H_9$ | $n-C_4H_9$ |
| $CH_3$ | $n-C_4H_9$ | $n-C_4H_9$ |
| H | $-CH_2-CH_2-$ | |
| $CH_3$ | $-CH_2-CH_2-$ | |
| H | $CH_3$<br>\|<br>$-CH_2-CH-$ | |

Tabelle 1 - Fortsetzung

| $R^1$ | $R^2$ | $R^3$ |
|---|---|---|
| $CH_3$ | 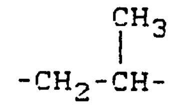 | |
| H | 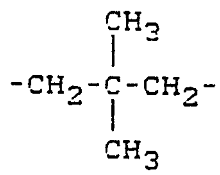 | |
| $CH_3$ | 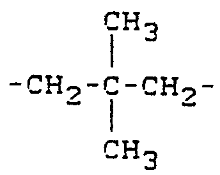 | |
| H | $-CH_2CH_2Cl$ | $-CH_2CH_2Cl$ |
| $CH_3$ | $-CH_2CH_2Cl$ | $-CH_2CH_2Cl$ |

Verwendet man Hydroxymethylphosphonsäurediethylester und 3-(2,6-Dichlor-4-trifluormethyl-phenoxy)-6-nitro-benzoesäurechlorid als Ausgangsstoffe, so kann der Verlauf des erfindungsgemäßen Verfahrens (a) durch das folgende Formelschema wiedergegeben werden:

a) 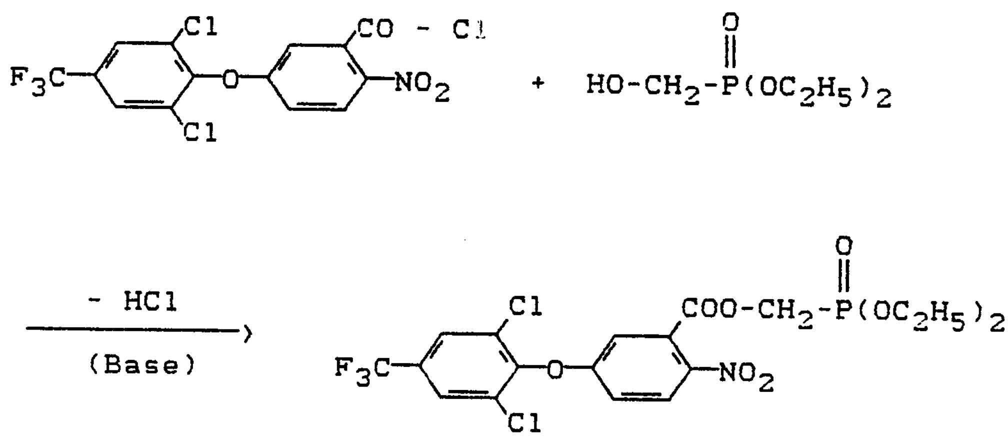


Verwendet man 3-(2,6-Dichlor-4-trifluormethylphenoxy)-benzoesäure-(diethoxyphosphonyl)methylester als Ausgangsstoff, Salpetersäure als Reaktionskomponente, Essigsäureanhydrid und Eisessig als Verdünnungsmittel, so kann der Verlauf des erfindungsgemäßen Verfahrens (b) durch das folgende Formelschema wiedergegeben werden:

b) 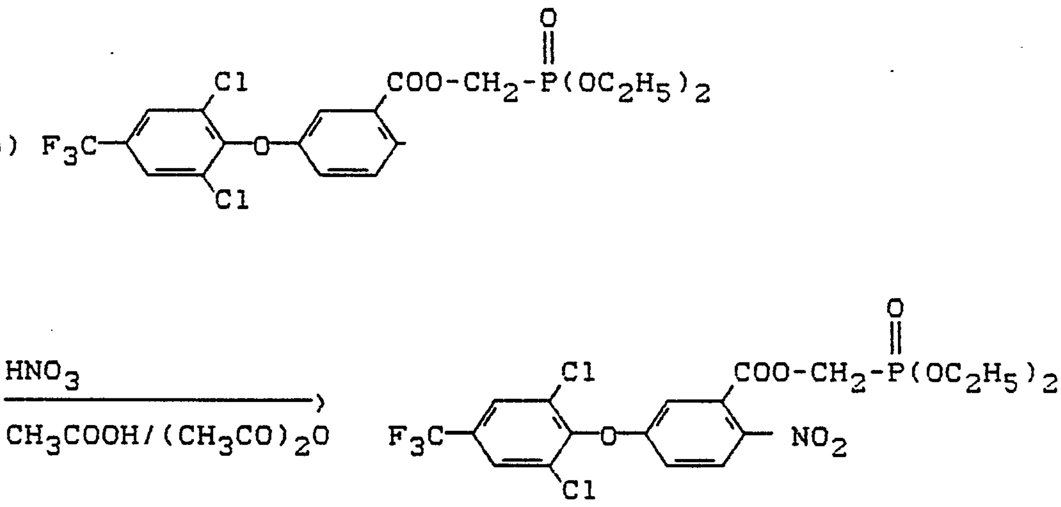


Die bei dem erfindungsgemäßen Verfahren (a) als Ausgangsstoffe benötigten Phenoxybenzoesäurechloride sind durch die Formel (II) definiert. In dieser Formel hat R vorzugsweise diejenige Bedeutung, die bereits im Zusammenhang mit der Beschreibung der erfindungsgemäßen Verbindungen der Formel (I) vorzugsweise für diesen Rest genannt wurde.

Als Beispiele für die Verbindungen der Formel (II) seien genannt: 3-(2,6-Dichlor-4-trifluormethylphenoxy)-6-nitrobenzoesäurechlorid und 3-(2,6-Dichlor-4-trifluoromethylphenoxy)-benzoesäurechloride.

Die Phenoxybenzoesäurechloride der Formel (II) sind bekannt oder lassen sich nach bekannten Verfahren in einfacher Weise herstellen (vgl. DE-OS 2 311 638 und EP-OS 63 741).

Die bei dem erfindungsgemäßen Verfahren (a) weiterhin als Ausgangsstoffe benötigten Hydroxymethylphosphonsäureester sind durch die Formel (III) definiert. In dieser Formel haben $R^1$, $R^2$ und $R^3$ vorzugsweise diejenigen Bedeutungen, die bereits im Zusammenhang mit der Beschreibung der erfindungsgemäßen Stoffe der Formel (I) vorzugsweise für diese Reste genannt wurden.

Die Verbindungen der Formel (III) sind bekannt und/oder können nach allgemein bekannten Methoden hergestellt werden (vgl. z.B. Houben-Weyl-Müller "Methoden der organischen Chemie", Band 12/1, S. 475 - Thieme Verlag Stuttgart).

Als Beispiele für Hydroxymethylphosphonsäureester der Formel (III) seien die in der folgenden Tabelle formelmäßig aufgeführten Verbindungen genannt:

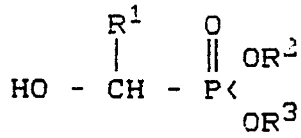 (III)

Tabelle 2

| $R^1$ | $R^2$ | $R^3$ |
|---|---|---|
| $CH_3$ | $C_2H_5$ | $C_2H_5$ |
| H | $n-C_3H_7$ | $n-C_3H_7$ |
| $CH_3$ | $n-C_3H_7$ | $n-C_3H_7$ |
| H | $i-C_3H_7$ | $i-C_3H_7$ |
| $CH_3$ | $i-C_3H_7$ | $i-C_3H_7$ |
| H | $n-C_4H_9$ | $n-C_4H_9$ |
| $CH_3$ | $n-C_4H_9$ | $n-C_4H_9$ |
| H | $-CH_2CH_2Cl$ | $-CH_2CH_2Cl$ |
| $CH_3$ | $-CH_2CH_2Cl$ | $-CH_2CH_2Cl$ |
| H | $-CH_2-CH_2-$ | |
| $CH_3$ | $-CH_2-CH_2-$ | |

Tabelle 2 - Fortsetzung

| $R^1$ | $R^2$ | $R^3$ |
|---|---|---|
| H | 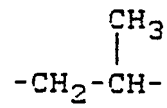 | |
| $CH_3$ | 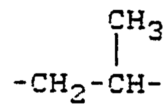 | |
| H | 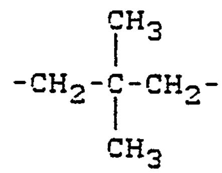 | |
| $CH_3$ | 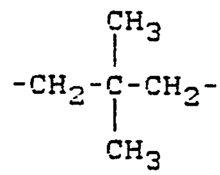 | |

Das erfindungsgemäße Verfahren (a) zur Herstellung der neuen Phenoxybenzoesäure-Derivate der Formel (I) wird vorzugsweise unter Verwendung von Verdünnungsmitteln durchgeführt. Als Verdünnungsmittel kommen dabei praktisch alle inerten organischen Lösungsmittel infrage. Hierzu gehören vorzugsweise aliphatische und aromatische, gegebenenfalls halogenierte Kohlenwasserstoffe wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol und o-Dichlorbenzol, Ether wie Diethyl-und Dibutylether, Glykoldimethylether und Diglykoldimethylether, Tetrahydrofuran und Dioxan, Ketone wie Aceton, Methyl-ethyl-, Methyl-isopropyol-und Methylisobutyl-keton, Ester wie Essigsäuremethylester und -ethylester, Nitrile wie z.B. Acetonitril und Propionitril, Amide wie z.B. Dimethylformamid, Dimethylacetamid und N-Methyl-pyrrolidon sowie Dimethylsulfoxid und Tetramethylensulfon.

Als Säurebindemittel können bei dem erfindungsgemäßen Verfahren (a) alle üblicherweise für derartige Umsetzungen verwendbaren Säurebindemittel eingesetzt werden. Vorzugsweise in Frage kommen Alkalimetallhydroxide wie z.B. Natrium-und Kaliumhydroxid, Erdalkalihydroxide wie z.B. Calciumhydroxid, Alkalicarbonate und alkoholate wie Natrium-und Kaliumcarbonat, Natrium-und Kaliummethylat bzw. -ethylat, ferner aliphatische, aromatische oder heterocyclische Amine, beispielsweise Triethylamin, Trimethylamin, Dimethylanilin, Dimethylbenzylamin, Pyridin, 1,5-Diaza-bicyclo-[4,3,0]-nonen-5 (DBN) und 1,8-Diazabicyclo-[5,4,0]-undec-7-en (DBU).

Die Reaktionstemperaturen können bei dem erfindungsgemäßen Verfahren (a) zur Herstellung der Phenoxybenzoesäure-Derivate der Formel (I) in einem größeren Bereich variiert werden. Im allgemeinen arbeitet man bei Temperaturen zwischen -20 °C und +100 °C, vorzugsweise bei Temperaturen zwischen 0 °C und 80 °C.

Das erfindungsgemäße Verfahren (a) wird im allgemeinen unter Normaldruck durchgeführt. Es ist jedoch auch möglich, unter erhöhtem oder vermindertem Druck zu arbeiten.

Zur Durchführung des erfindungsgemäßen Verfahrens (a) werden die jeweils benötigten Ausgangsstoffe im allgemeinen in angenähert äquimolaren Mengen eingesetzt. Es ist jedoch auch möglich, eine der beiden jeweils eingesetzten Komponenten in einem größeren Überschuß zu verwenden. Die Reaktionen werden im allgemeinen in einem geeigneten Verdünnungsmittel in Gegenwart eines Säureakzeptors durchgeführt, und das Reaktionsgemisch wird mehrere Stunden bei der jeweils erforderlichen Temperatur gerührt. Die Aufarbeitung erfolgt bei dem erfindungsgemäßen Verfahren jeweils nach üblichen Methoden.

Die bei dem erfindungsgemäßen Verfahren (b) als Ausgangsstoffe benötigten Verbindungen sind durch die Formel (Ia) definiert. In dieser Formel haben $R^1$, $R^2$ und $R^3$ vorzugsweise diejenigen Bedeutungen, die bereits im Zusammenhang mit der Beschreibung der erfindungsgemäßen Stoffe der Formel (I) vorzugsweise für diese Reste genannt wurden.

Die Verbindungen der Formel (Ia) sind erfindungsgemäße Verbindungen und lassen sich nach dem erfindungsgemäßen Verfahren (a) herstellen.

Für die Nitrierung der Verbindungen der Formel (Ia) verwendet man im Falle des erfindungsgemäßen Verfahrens (b) vorzugsweise konzentrierte Salpetersäure oder Schwermetallnitrate, wie z.B. Eisen (III)-nitrat oder Kupfernitrat.

Als Katalysatoren kommen für die nach dem erfindungsgemäßen Verfahren (b) durchzuführende Nitrierung vorzugsweise Protonensäuren, wie z.B. Schwefelsäure oder Essigsäure in Betracht.

Als Verdünnungsmittel kommen bei der Durchführung der Nitrierung nach dem erfindungsgemäßen Verfahren (b) vorzugsweise halogenierte Kohlenwasserstoffe, wie z.B. Methylenchlorid oder 1,2-Dichloerthan, und ferner Carbonsäureanhydride, wie z.B. Essigsäureanhydrid, in Frage.

Die Reaktionstemperaturen können bei der Nitrierung nach dem erfindungsgemäßen Verfahren (b) innerhalb eines größeren Bereiches variiert werden. Im allgemeinen arbeitet man bei Temperaturen zwischen -20 °C und +60 °C, vorzugsweise zwischen 0 °C und +40 °C.

Die Nitrierung nach dem erfindungsgemäßen Verfahren (b) wird im allgemeinen unter Normaldruck durchgeführt. Es ist jedoch auch möglich, unter erhöhtem oder vermindertem Druck zu arbeiten.

Bei der Durchführung der Nitrierung nach dem erfindungsgemäßen Verfahren (b) setzt man auf 1 Mol einer Verbindung der Formel (Ia) im allgemeinen 1 bis 5 Mol, vorzugsweise 1,1 bis 3 Mol an Nitrierungsmittel und gegebenenfalls etwa die gleiche Menge eines Katalysators ein. Die Ausgangskomponenten werden vorzugsweise unter Eiskühlung zusammengegeben und dann gegebenenfalls bei leicht erhöhter Temperatur bis zu Ende der Umsetzung gerührt.

Die Aufarbeitung erfolgt nach üblichen Methoden. Im allgemeinen verfährt man in der Weise, daß man das Reaktionsgemisch nach beendeter Umsetzung in Eiswasser gießt, absaugt bzw. extrahiert und das anfallende Produkt gegebenenfalls durch Umkristallisieren reinigt.

Die erfindungsgemäßen Wirkstoffe können als Defoliants, Desiccants, Krautabtötungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Ob die erfindungsgemäßen Stoffe als totale oder selektive Herbizide wirken, hängt im wesentlichen von der angewendeten Menge ab.

Die erfindungsgemäßen Wirkstoffe können z.B. bei den folgenden Pflanzen verwendet werden:

<u>Dikotyle Unkräuter der Gattungen:</u> Sinapis, Lepidium, Galium, Stellaria, Matricaria, Anthemis, Galinsoga, Chenopodium, Urtica, Senecio, Amaranthus, Portulaca, Xanthium, Convolvulus, Impomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papver, Centaurea.

<u>Dikotyle Kulturen der Gattungen:</u>Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

<u>Monokotyle Unkräuter der Gattungen:</u> Echinochloa, Setaria, Panicum, Digitaria, Phleum, Poa, Festuca, Eleusine, Brachiaria, Lolium, Bromus, Avena; Cyperus, Sorghum, Agropyron, Cynodon, Monochoria, Fimbristylis, Sagittaria, Eleocharis, Scirpus, Paspalum, Ischaemum, Sphenoclea, Datyloctenium, Agrostis, Alopecurus, Apera.

<u>Monokotyle Kulturen der Gattungen:</u> Oryzea, Zea, Triticum, Hordeum, Avena, Secale, Sorghum, Panicum, Saccharum, Ananas, Asparagus, Allium.

Die Verwendung der erfindungsgemäßen Wirkstoffe ist jedoch keineswegs auf diese Gattungen beschränkt, sondern erstreckt sich in gleicher Weise auch auf andere Pflanzen.

Die Verbindungen eignen sich in Abhängigkeit von der Konzentration zur Totalunkrautbekämpfung z.B. auf Industrie-und Gleisanlagen und auf Wegen und Plätzen mit und ohne Baumbewuchs. Ebenso können die Verbindungen zur Unkrautbekämpfung in Dauerkulturen, z.B. Forst-. Ziergehölz-, Obst-, Wein-, Cirtrus-, Nuß-, Bananen-, Kaffee-, Tee-, Gummi-, Ölpalm-, Kakao, Beerenfrucht-und Hopfenanlagen und zur selektiven Unkrautbekämpfung in einjährigen Kulturen eingesetzt werden.

Die erfindungsgemäßen Wirkstoffe eignen sich sehr gut zur selektiven Bekämpfung dikotyler Unkräuter in mono-und dikotylen Kulturen, insbesondere in Getreide wie beispielsweise Weizen und in Sojabohnen, im Nachauflaufverfahren.

Die Wirkstoffe können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, wirkstoffimprägnierte Natur-und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder - schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchloride aliphatische Kohlenwasserstoffe, wie Cyclohexan oder Paraffine, z.B. Erdölfraktionen, mineralische und pflanzliche Öle, Alkohole wie Butanol oder Glycol sowie deren Ether und Ester, Ketone wie Aceton, Methylethylketon, Methylisobutylketon oder Cyclohexanon, stark polare Lösungsmittel, wie Dimethylformamid und Dimethylsulfoxid sowie Wasser.

Als feste Trägerstoffe kommen in Frage:

z.B. Ammoniumsalze und natürliche Gesteinmehle, wie Kaoline, Tonerden, Talkum, Kreide, Quarz, Attapulgit,Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktioniertenatürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier-und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergier mittel kommen in Frage: z.B. Lignin-Sulfitablauge und Methylcellulose.

Es können in den Formulierungen Haftmittel wie Carboxymethylcellulose, natürliche und synthetische,pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo-und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können als solche oder in ihren Formulierungen auch in Mischung mit bekannten Herbiziden zur Unkrautbekämpfung Verwendung finden, wobei Fertigformulierungen oder Tankmischungen möglich sind.

Für die Mischung können bekannte Herbizide verwendet werden wie z.B. N-(2-Benzthiazolyl)-N,N'-dimethylharnstoff, 3-(3-Chlor-4-methylphenyl)-1,1-dimethylharnstoff, 3-(4-Isopropylphenyl)-1,1-dimethylharnstoff, 2-Chlor-N-{[4-methoxy-6-methyl-1,3,5-triazin-2-yl)-amino]-carbonyl}-benzolsulfonamid, Ethyl-2-{[(4-Chlor-6-methoxy-2-pyrimidinyl)-aminocarbonyl]aminosulfonyl}-benzoat, 2-Ethylamino-6-(1,1-dimethylethyl-amino)-4-methylthio-1,3,5-triazin, 4-Amino-6-(1,1-dimethylethyl)-3-methylthio-1,2,4,-triazin-5(4H)-on, 4-Amino-6-(1,1-dimethylethyl)-3-ethylthio-1,2,4-triazin-5(4H)-on, 1-Amino-6-ethylthio-3-(2,2-dimethylpropyl)-1,3,5-triazin-2,4-(1H,3H)-dion, 5-(2-Chlor-4-trifluormethyl-phenoxy)-N-methylsulfonyl-2-nitrobenzamid, (2-Ethoxy-1-methyl-2-oxo-ethyl)-5-(2-chlor-4-trifluormethyl-phenoxy)-2-nitrobenzoat, 2-[4-(2,4-Dichlorphenoxy)-phenoxy]-propionsäuremethylester, 2-{4-[(3-Chlor-5-trifluormethyl-2-pyridinyl)oxy]-phenoxy}-propionsäure, das R-Enantiomere des 2-{4-[(3,5-Dichlor-2-pyridinyl)oxy]-phenoxy}-propionsäure-(trimethylsilyl)-methylesters, 2,4-Dichlorphenoxyessigsäure, 2-(2,4-Dichlorphenoxy)-propionsäure, 4-Chlor-2-methyl-phenoxy-essigsäure, 2-(4-Chlor-2-methylphenoxy)-propion säure, 3,5-Diiod-4-hydroxy-benzonitril, 3,5-Dibrom-4-hydroxy-benzonitril, 2-[5-Methyl-5-(1-methylethyl)-4-oxo-2-imidazolin-2-yl]-3-pyridincarbonsäure, 2-(1-Ethoxyamino-butyliden)-5-(2-ethylthiopropyl)-1,3-cyclohexandion, [(4-Amino-3,5-dichlor-6-fluor-2-pyridinyl)-oxy]-essigsäure und 3-Isopropyl-2,1,3-benzothiadiazinon-(4)-2,2-dioxid. Einige Mischungen besitzen überraschenderweise auch synergistische Wirkung.

Auch Mischungen mit anderen bekannten Wirkstoffen, wie Fungiziden, Insektiziden, Akariziden, Nematiziden, Schutz stoffen gegen Vogelfraß, Pflanzennährstoffen und Bodenstrukturverbesserungsmitteln sind möglich.

Die Wirkstoffe können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise z.B. durch Gießen, Spritzen, Sprühen, Streuen.

Die erfindungsgemäßen Wirkstoffe können sowohl vor als auch nach dem Auflaufen der Pflanzen appliziert werden.

Sie können auch vor der Saat in den Boden eingearbeitet werden.

Die angewandte Wirkstoffmenge kann in einem größeren Bereich schwanken. Sie hängt im wesentlichen von der Art des gewünschten Effektes ab. Im allgemeinen liegen die Aufwandmengen zwischen 0,01 und 10 kg Wirkstoff pro Hektar Bodenfläche, vorzugsweise zwischen 0,05 und 5 kg pro ha.

Die Herstellung und die Verwendung der erfindungsgemäßen Wirkstoffe geht aus den nachfolgenden Beispielen hervor.

Herstellungsbeispiele

Beispiel 1

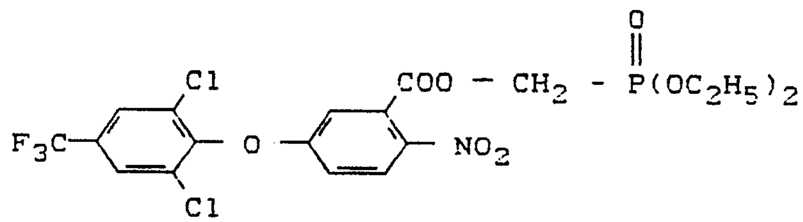

(Verfahren (a))

467 g (2,65 Mol) Hydroxymethanphosphonsäurediethylester und 240g (3,00 Mol) Pyridin werden in 1500 ml Methylenchlorid gelöst und bei -5 °C mit einer Lösung aus 815 g (1,9 Mol) 2-Nitro-5-(2,6-Dichlor-4-trifluormethylphenoxy)-benzoesäurechlorid in 2000 ml Methylenchlorid tropfenweise versetzt. Die Reaktionsmischung wird dann 5 Stunden bei 20 °C nachgerührt. Zur Aufarbeitung wird die organische Phase je einmal mit 1000 ml 2N-Salzsäure und 1000 ml gesättigter Natriumhydrogencarbonatlösung extrahiert. Die organische Phase wird dann über Natriumsulfat getrocknet und eingeengt. Zur Reinigung wird die zurückbleibende feste Substanz mit Ligroin verrührt und abgesaugt.

Man erhält 605 g (59 % der Theorie) 3-(2,6-Dichlor-4-trifluormethyl-phenoxy)-6-nitro-benzoesäure-(diethoxyphosphonyl)methylester vom Schmelzpunkt 50-53° C.

Analog Beispiel 1 können die folgenden Verbindungen der Formel (I) erhalten werden:

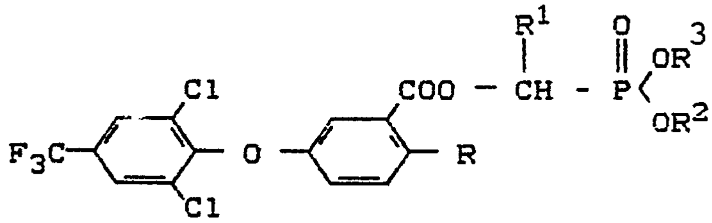 (I)

<u>Tabelle 3</u>

| Beisp.-Nummer | R | $R^1$ | $R^2$ | $R^3$ | Phys. Konstante |
|---|---|---|---|---|---|
| 2 | $NO_2$ | $CH_3$ | $C_2H_5$ | $C_2H_5$ | $n_D^{20}$: 1,5233 |
| 3 | $NO_2$ | H | $CH_2CH_2Cl$ | $CH_2CH_2Cl$ | |
| 4 | $NO_2$ | H | 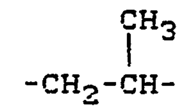 | | |
| 5 | $NO_2$ | H | 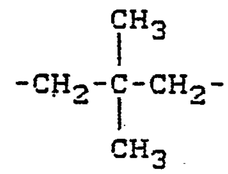 | | |

Beispiel A

Post-emergence-Test

Lösungsmittel: 5 Gewichtsteile Aceton

Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5 -15 cm haben so, daß die jeweils gewünschten Wirkstoffmengen pro Flächeneinheit ausgebracht werden. Die Konzentration der Spritzbrühe wird so gewählt, daß in 2000 l Wasser/ha die jeweils gewünschten Wirkstoffmengen ausgebracht werden. Nach drei Wochen wird der Schädigungsgrad der Pflanzen bonitiert in % Schädigung im Vergleich zur Entwicklung der unbehandelten Kontrolle.

Es bedeuten:

0% = keine Wirkung (wie unbehandelte Kontrolle)

100% = totale Vernichtung

In diesem Test zeigen z. B. die Wirkstoffe gemäß Beispiel 1 und 2 bei der Bekämpfung von Abutilon, Ipomoea, Sida und Viola in Weizen und Sojabohnen eine bessere selektive herbizide Wirksamkeit und eine bessere Verträglichkeit als die Vergleichssubstanz (A), dem Natriumsalz der 3-(2-Chlor-4-trifluormethyl-phenoxy)-6-nitro-benzoesäure, bekannt aus DE-OS 2,311,638).

**Ansprüche**

1. Phenoxybenzoesäure-Derivate der Formel (I),

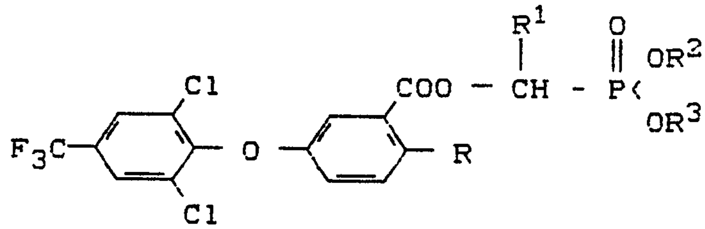

(I)

in welcher
R für Wasserstoff, Nitro oder Cyano steht,
$R^1$ für Wasserstoff oder Alkyl steht und
$R^2$ und $R^3$ gleich oder verschieden sind und für Wasserstoff, Alkyl, Halogenalkyl oder für ein Äquivalent eines Alkali-oder Erdalkalimetallions stehen oder
$R^2$ und $R^3$ gemeinsam für einen gegebenenfalls substituierten Alkandiylrest stehen.

2. Phenoxybenzoesäure-Derivate der Formel (I) gemäß Anspruch 1, in welcher
R für Wasserstoff, Nitro oder Cyano steht,
$R^1$ für Wasserstoff oder Alkyl mit 1 bis 3 Kohlenstoffatomen steht und
$R^2$ und $R^3$ gleich oder verschieden sind und für Wasserstoff,Alkyl mit 1 bis 6 Kohlenstoffatomen, Halogenalkyl mit 1 bis 6 Kohlenstoffatomen im Alkylteil und 1 bis 5 Halogenatomen, wie Fluor,.Chlor und/oder Brom oder für ein Äquivalent eines Natrium-, Kalium-, Calcium-oder Magnesiumions stehen oder
$R^2$ und $R^3$ gemeinsam für einen gegebenenfalls durch $C_1$-$C_2$-Alkyl substituierten Alkandiylrest mit 2 bis 5 Kohlenstoffatomen stehen.

3. Phenoxybenzoesäure-Derivate der Formel (I) gemäß Anspruch 1, in welcher
R für Nitro steht,
$R^1$ für Wasserstoff oder Alkyl mit 1 oder 2 Kohlenstoffatomen steht, und
$R^2$ und $R^3$ gleich oder verschieden sind und für Wasserstoff, Alkyl mit 1 bis 4 Kohlenstoffatomen, Halogenalkyl mit 1 bis 4 Kohlenstoffatomen im Alkylteil und 1 bis 3 Halogenatomen (Fluor und/oder Chlor) oder für ein Äquivalent eines Natrium-, Kalium-oder Calciumions stehen oder
$R^2$ und $R^3$ gemeinsam für einen gegebenenfalls durch Methyl und/oder Ethyl substituierten Alkandiylrest mit 2 oder 3 Kohlenstoffatomen stehen.

4. Phenoxybenzoesäure-Derivate der Formel (I) gemäß Anspruch 1, in welcher
R für Nitro steht,
$R^1$ für Wasserstoff oder Methyl steht und
$R^2$ und $R^3$ gleich oder verschieden sind und für Wasserstoff, Methyl, Ethyl, n-Propyl, i-Propyl, n-Butyl, i-Butyl, sec.-Butyl, tert.-Butyl, Chlormethyl, Chlorethyl, 1-Chlor-n-propyl, Fluormethyl, Fluorethyl oder 1-Fluor-n-propyl stehen.

5. Verfahren zur Herstellung von Phenoxybenzoesäure-Derivaten der Formel (I)

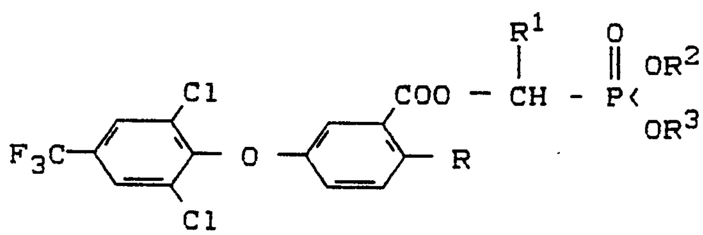

(I)

in welcher
R für Wasserstoff, Nitro oder Cyano steht,
$R^1$ für Wasserstoff oder Alkyl steht und
$R^2$ und $R^3$ gleich oder verschieden sind und für Wasserstoff, Alkyl, Halogenalkyl oder für ein Äquivalent

eines Alkali-oder Erdalkalimetallions stehen oder
$R^2$ und $R^3$ gemeinsam für einen gegebenenfalls substituierten Alkandiylrest stehen,
dadurch gekennzeichnet, daß man
a) Phenoxybenzoesäurechloride der Formel (II)

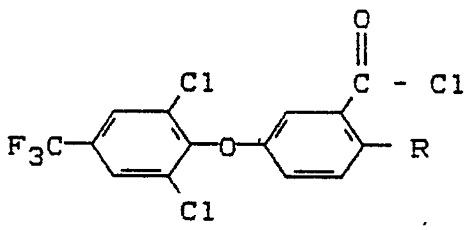

(II)

in welcher
R die oben angegebene Bedeutung hat,
mit Hydroxymethylphosphonsäureestern der Formel (II)

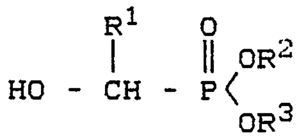

(III)

in welcher
$R^1$, $R^2$ und $R^3$ die oben angegebenen Bedeutungen haben,
gegebenenfalls in Gegenwart eines Säurebindemittels sowie gegebenenfalls in Gegenwart eines Verdünnungsmittels umsetzt,
oder daß man
b) Phenoxybenzoesäure-Derivate der Formel (Ia),

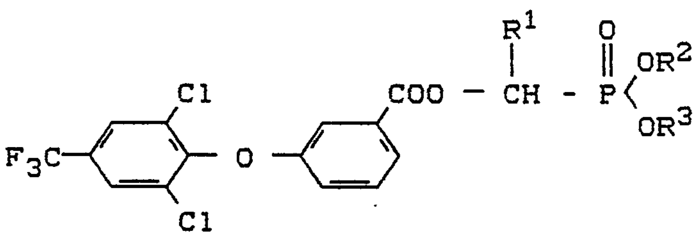

(Ia)

in welcher
$R^1$, $R^2$ und $R^3$ die oben angegebenen Bedeutungen haben,
mit einem Nitrierungsmittel gegebenenfalls in Gegenwart eines Katalysators sowie gegebenenfalls in Gegenwart eines Verdünnungsmittels umsetzt.

6. Herbizide Mittel, gekennzeichnet durch einen Gehalt an mindestens einem Phenoxybenzoesäure-Derivat der Formel (I) gemäß den Anspruchen 1 bis 5.

7. Verfahren zur Bekämpfung von Unkraut, dadurch gekennzeichnet, daß man Phenoxybenzoesäure-Derivate der Formel (I) gemäß den Ansprüchen 1 bis 5 auf Unkräuter und/oder ihren Lebensraum einwirken läßt.

8. Verwendung von Phenoxybenzoesäure-Derivaten der Formel (I) gemäß den Ansprüchen 1 bis 5 zur Bekämpfung von Unkräutern.

9. Verfahren zur Herstellung von herbiziden Mitteln, dadurch gekennzeichnet, daß man Phenoxybenzoesäure-Derivate der Formel (I) gemäß den Ansprüchen 1 bis 5 mit Streckmitteln und/oder oberflächenaktiven Substanzen vermischt.

10. Die Verbindung der Formel

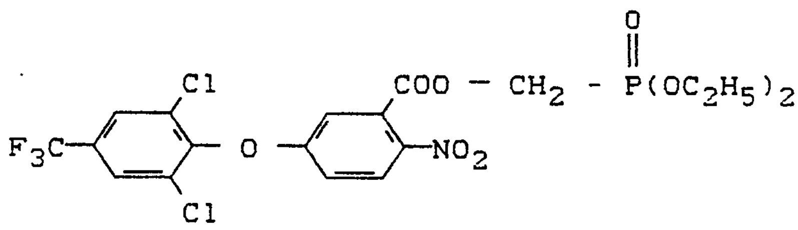

Europäisches Patentamt

# EUROPÄISCHER RECHERCHENBERICHT

Nummer der Anmeldung

EP 86 11 4462

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | AU-A-4 127 885 (CIBA GEIGY AG) * Insgesamt * & EP-A-0 165 203 (Kat. P,X) | 1-10 | C 07 F 9/40<br>C 07 F 9/38<br>A 01 N 57/22 |
| | --- | | |
| Y | EP-A-0 078 536 (ZOECON CORP.) * Seite 16, Zeilen 29-30; Seite 22, Zeilen 36-37; Ansprüche * | 1,6-9 | |
| | ----- | | |
| | | | RECHERCHIERTE SACHGEBIETE (Int. Cl.4) |
| | | | C 07 F 9/00 |

Der vorliegende Recherchenbericht wurde für alle Patentansprüche erstellt.

| Recherchenort | Abschlußdatum der Recherche | Prüfer |
|---|---|---|
| DEN HAAG | 03-02-1987 | BESLIER L.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82